# EUROPÄISCHE PATENTANMELDUNG

(11) **EP 2 631 392 A1**
(43) Veröffentlichungstag der Anmeldung: **28.08.2013**
(21) Anmeldenummer: 12156397.7
(22) Anmeldetag: 21.02.2012
(51) Int. Cl.: E04G 23/02, E04C 5/12

(54) **Vorrichtung zur Krafteinleitung in Zugglieder aus faserverstärkten Kunststoff-Flachbandlamellen**

(71) Anmelder: Sika Technology AG, 6340 Baar (CH)
(72) Erfinder: Berset, Thierry, 8400 Winterthur (CH)
(74) Vertreter: Sika Patent Attorneys

(57) **Zusammenfassung**

Eine Vorrichtung (1) zur Krafteinleitung in Zugglieder (2) aus faserverstärkten Kunststoff-Flachbandlamellen umfassend mindestens ein Klemmelement (3), welches am Zugglied (2) angeordnet ist und mindestens eine Kontaktfläche mit dem Zugglied (2) aufweist; sowie mindestens eine Hülse (4), welche um das Klemmelement (3) und das Zugglied (2) herum angeordnet ist und dadurch über das Klemmelement (3) einen Klemmdruck auf das Zugglied (2) ausübt; wobei
das Klemmelement (3) aus mindestens zwei aufeinanderliegenden Schichten gebildet ist, von denen mindestens eine erste, weiche Schicht aus einem Material besteht, welches einen Elastizitätsmodul im Bereich von 1000 bis 6000 MPa aufweist, und von denen mindestens eine zweite, harte Schicht aus einem Material besteht, welches einen höheren Elastizitätsmodul als die weiche Schicht aufweist, und
dass die Gesamtheit der Klemmelemente (3) eine Struktur ohne Keilanzug aufweist und somit eine keilförmige oder konische Struktur aufweist, bei der die Querschnittsreduktion gegen die Zugrichtung des Zugglieds (2) verläuft, und dass die Hülse (4) eine zur Aufnahme des mindestens einen Klemmelements (3) und zur Ausübung eines Klemmdrucks geeignete innere Form aufweist.

## Beschreibung

### Technisches Gebiet

Die Erfindung betrifft eine Vorrichtung zur Krafteinleitung in Zugglieder aus faserverstärkten Kunststoff-Flachbandlamellen nach dem Oberbegriff des ersten Anspruchs. Weiterhin betrifft die Erfindung ein Verfahren zur Krafteinleitung in derartige Zugglieder, die Verwendung einer entsprechenden Vorrichtung, Zugglieder, welche eine oder mehrere erfindungsgemässe Vorrichtungen aufweisen, sowie ein Verfahren zur Verstärkung von Tragwerken unter Einsatz der erfindungsgemässen Vorrichtung.

### Stand der Technik

Die Verstärkung von Tragwerken, beispielsweise bei der Sanierung bestehender Bauwerke, durch Anbringen von Zuggliedern aus faserverstärkten Kunststoff-Flachbandlamellen, welche unter Spannung an das Tragwerk geklebt werden, ist bekannt und weist vielerlei Vorteile gegenüber der Verstärkung von Tragwerken mittels Stahlkonstruktionen auf. Da die Krafteinleitung in die Zugglieder hauptsächlich über deren Endverankerung an den Zugseiten des Tragwerks erfolgt, wird ihr besondere Bedeutung zugemessen.

Für die Endverankerung, jedoch auch für die Vorspannung, von Zuggliedern aus faserverstärkten Kunststoff-Flachbandlamellen, sind unterschiedliche Systeme bekannt, welche den besonderen Anforderungen im Umgang mit faserverstärkten Kunststoff-Flachbandlamellen Rechnung tragen. Insbesondere verbreitet sind Systeme bestehend aus Keilen und Hülse, bei welchen die Keile um das Zugglied angelegt werden und anschliessend in Zugrichtung der faserverstärkten Kunststoff-Flachbandlamelle in eine hochfeste Hülse getrieben werden. Dadurch, dass die Querschnittsreduktion der Keile in Zugrichtung ausgebildet ist, wird vermieden, dass die Keile unter Zugbelastung aus der Hülse gezogen werden.

Beispielsweise beschreibt WO 2005/061813 A1 Verankerungen für Zugglieder bestehend aus zwei Keilen und einem Ankerkörper, welcher im Wesentlichen eine Hülse für die Keile darstellt, wobei zwischen Keilen und Zugglied und/oder zwischen Keilen und Hülse eine zweite, wiederum keilförmige Schicht angeordnet ist. Diese zweite keilförmige Schicht besteht aus einem Material mit einem niedrigeren Elastizitätsmodul als jenes der ersten Keile. Die Krafteinleitung in das Zugglied erfolgt im beschriebenen System über die Hülse, d.h. über die Abstützung der Hülse auf das zu verstärkende Tragwerk. Der Nachteil der in WO 2005/061813 A1 beschriebenen Vorrichtungen liegt darin, dass beim Anlegen der Vorrichtung für die Krafteinleitung in das Zugglied die Keile mit Zugglied in die Hülse getrieben werden müssen. Da die Keile in Zugrichtung des Zugglieds eingetrieben werden müssen, geht bei der Anwendung derartiger Systeme an vorgespannten Zugglieder Spannkraft verloren.

### Darstellung der Erfindung

Die Aufgabe der vorliegenden Erfindung ist es daher, eine Vorrichtung zur Krafteinleitung in Zugglieder aus faserverstärkten Kunststoff-Flachbandlamellen bereitzustellen, welche die Nachteile des Standes der Technik überwindet und welche an einem gespannten Zugglied angebracht werden kann, ohne dass dabei Spannkraft verloren geht.

Erfindungsgemäss wird diese Aufgabe durch eine Vorrichtung nach Anspruch 1 gelöst.

Kern der Erfindung ist demnach eine Vorrichtung zur Krafteinleitung in Zugglieder aus faserverstärkten Kunststoff-Flachbandlamellen umfassend mindestens ein Klemmelement, welches am Zugglied angeordnet ist und mindestens eine Kontaktfläche mit dem Zugglied aufweist; sowie mindestens eine Hülse, welche um das Klemmelement und das Zugglied herum angeordnet ist und dadurch über das Klemmelement einen Klemmdruck auf das Zugglied ausübt; wobei
das Klemmelement aus mindestens zwei aufeinanderliegenden Schichten gebildet ist, von denen mindestens eine erste, weiche Schicht aus einem Material besteht, welches einen Elastizitätsmodul im Bereich von 1000 bis 6000 MPa aufweist, und von denen mindestens eine zweite, harte Schicht aus einem Material besteht, welches einen höheren Elastizitätsmodul als die weiche Schicht aufweist, und wobei die Gesamtheit der Klemmelemente eine Struktur ohne Keilanzug aufweist oder eine keilförmige oder konische Struktur aufweist, wobei die Querschnittsreduktion in diesem Fall gegen die Zugrichtung des Zugglieds verläuft, und dass die Hülse eine zur Aufnahme des mindestens einen Klemmelements und zur Ausübung eines Klemmdrucks geeignete innere Form aufweist.

Überraschenderweise wurde gefunden, dass mit der erfindungsgemässen Vorrichtung eine effiziente Krafteinleitung in Zugglieder aus faserverstärkten Kunststoff-Flachbandlamellen möglich ist, bei welcher auch bei der Anwendung an einem vorgespannten oder gespannten Zugglied keine Spannkraft durch den Weg des Eintreibens der Klemmelemente in die Hülse verloren geht.

Weiterhin weist die erfindungsgemässe Vorrichtung den Vorteil auf, dass der Einsatz von Klemmelementen mit den beschriebenen Eigenschaften einen gleichmässigen Klemmdruck bzw. Querdruck in der Grenzfläche zwischen Zugglied und Klemmelement erzeugt, was eine sehr effiziente und gleichmässige Krafteinleitung in Zugglieder ermöglicht.

Die erfindungsgemässe Vorrichtung weist zudem eine Reduktion der Langzeitverformung der Klemmelemente und damit des Spannkraftverlusts durch Kriechen des Materials auf.

Bei der bevorzugten Verwendung der erfindungsgemässen Vorrichtung mit entsprechenden Zuggliedern aus kohlefaserverstärkten Flachbandlamellen zur Tragwerksverstärkung, gewährleistet der zumindest für die weiche Schicht der Klemmelemente bevorzugt verwendete Kunststoff zusätzlich die galvanische Trennung zwischen der elektrisch leitfähigen Lamelle und der typischerweise aus Stahl bestehenden Verankerung im Bauwerk. Ohne galvanische Trennung besteht die Gefahr, dass das Zugglied über die Verankerungen mit der inneren Stahlbewehrung des zu verstärkenden Stahlbetonbauteils elektrisch verbunden wird und mit diesem ein galvanisches Makroelement bildet. Dies kann zu einer sehr rasch fortschreitenden Korrosion der Verankerungen oder der inneren Stahlbewehrung des Stahlbetonbauteils führen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Anhand der Zeichnungen werden Ausführungsbeispiele der Erfindung näher erläutert. Gleiche Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:
Figur 1 schematisch eine erfindungsgemässe Vorrichtung mit Zugglied;
Figur 2 schematisch eine erfindungsgemässe Vorrichtung mit Zugglied;
Figur 3 schematisch einen Querschnitt durch eine erfindungsgemässe Vorrichtung mit Zugglied;
Figur 4 schematisch einen Querschnitt durch eine erfindungsgemässe Vorrichtung mit Zugglied;
Figur 5 schematisch einen Querschnitt durch eine erfindungsgemässe Vorrichtung mit Zugglied;
Figur 6a schematisch einen Längsschnitt durch eine erfindungsgemässe Vorrichtung mit Zugglied;
Figur 6b schematisch einen Längsschnitt durch eine erfindungsgemässe Vorrichtung mit Zugglied und mehrteiliger Hülse;
Figur 7 schematisch einen Ausschnitt des Aufbaus einer erfindungsgemässen Vorrichtung mit Reibungselement und Zugglied;
Figur 8 schematisch einen Längsschnitt durch eine erfindungsgemässe Vorrichtung mit Schlitzplatte und Zugglied;
Figuren 9a bis 9c jeweils schematisch einen Längsschnitt durch eine erfindungsgemässe Vorrichtung, wobei Klemmelemente mit weicher und harter Schicht dargestellt sind;
Figuren 10a bis 10e schematisch die Schritte eines Verfahrens zur Krafteinleitung in Zugglieder aus faserverstärkten Kunststoff-Flachbandlamellen im Längsschnitt;
Figuren 11 a und 11 b schematisch eine Verankerung eines Zugglieds mit erfindungsgemässer Vorrichtung zur Krafteinleitung an einem zu verstärkenden Tragwerk im Längsschnitt und in der Aufsicht;
Figuren 12a und 12b schematisch ein Zugelement für ein Zugglied mit erfindungsgemässer Vorrichtung zur Krafteinleitung an einem zu verstärkenden Tragwerk im Längsschnitt und in der Aufsicht.

In den Figuren sind nur die für das unmittelbare Verständnis der Erfindung wesentlichen Elemente gezeigt.

### Wege zur Ausführung der Erfindung

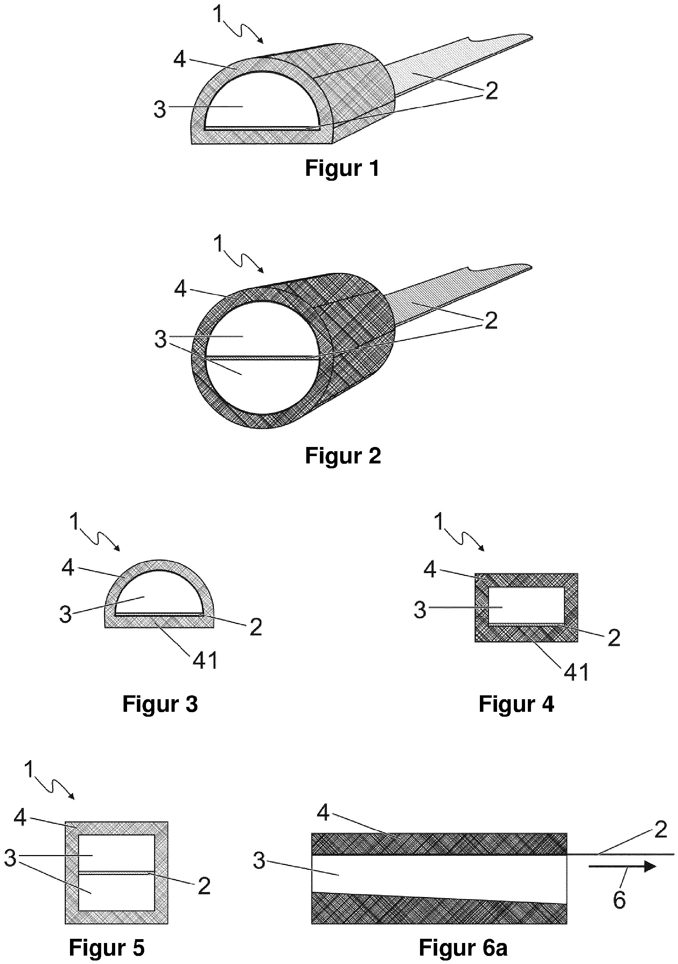

Figur 1 zeigt eine Vorrichtung 1 zur Krafteinleitung in Zugglieder 2 aus faserverstärkten Kunststoff-Flachbandlamellen umfassend ein Klemmelement 3, welches am Zugglied angeordnet ist und eine Kontaktfläche mit dem Zugglied aufweist, sowie mindestens eine Hülse 4, welche um das Klemmelement und das Zugglied herum angeordnet ist und dadurch über das Klemmelement einen Klemmdruck auf das Zugglied ausübt.

Das Klemmelement ist dabei aus mindestens zwei aufeinanderliegenden Schichten gebildet, von denen mindestens eine erste, weiche Schicht aus einem Material besteht, welches einen Elastizitätsmodul im Bereich von 1000 bis 6000 MPa aufweist, und von denen mindestens eine zweite, harte Schicht aus einem Material besteht, welches einen höheren Elastizitätsmodul als die weiche Schicht aufweist.

Somit beschreibt im vorliegenden Dokument der Term "weiche Schicht" jene Schicht des Klemmelements, welches einen Elastizitätsmodul im Bereich von 1000 bis 6000 MPa aufweist. Als "harte Schicht" wird somit jene Schicht des Klemmelements mit einem höheren Elastizitätsmodul als das der weichen Schicht bezeichnet.

Weiterhin ist für die vorliegende Erfindung wesentlich, dass die Gesamtheit der Klemmelemente eine Struktur ohne Keilanzug aufweist oder eine keilförmige oder konische Struktur aufweist, wobei in diesem Fall die Querschnittsreduktion gegen die Zugrichtung des Zugglieds verläuft, und dass die Hülse eine zur Aufnahme des mindestens einen Klemmelements und zur Ausübung eines Klemmdrucks geeignete innere Form aufweist. Innerhalb dieser Massgabe, kann das Klemmelement grundsätzlich jede beliebige Form aufweisen, sofern diese dazu geeignet ist das Zugglied zwischen Klemmelement und Hülse bzw. zwischen mehreren Klemmelementen einzuklemmen.

Der Einfachheit halber sind in einigen Figuren die Klemmelemente jeweils einteilig dargestellt, d.h. die harte und die weiche Schicht sind nicht separat abgebildet.

Insbesondere weist die erfindungsgemässe Vorrichtung ein oder zwei Klemmelemente auf, welche am oder um das Zugglied angeordnet sind und jeweils mindestens eine Kontaktfläche mit dem Zugglied aufweisen.

Bei der bevorzugten Ausführungsform der Erfindung mit zwei Klemmelementen, sind diese vorzugsweise jeweils als eine Hälfte eines in Längsrichtung halbierten Zylinders ausgebildet. Die ebene Fläche, entlang welcher der Zylinder halbiert wurde, stellt in diesem Fall die Kontaktfläche des Klemmelements mit dem Zugglied dar. Weiterhin kann die Gesamtheit der Klemmelemente, d.h. alle Klemmelemente einer Vorrichtung mit sich berührenden Kontaktflächen, eine konische oder keilförmige Struktur aufweisen, wobei die Querschnittsreduktion in diesem Fall stets gegen die Zugrichtung des Zugglieds verläuft.

Figur 2 zeigt eine bevorzugte Ausführungsform der Vorrichtung 1 zur Krafteinleitung in Zugglieder 2 aus faserverstärkten Kunststoff-Flachbandlamellen umfassend zwei Klemmelemente 3, welche um das Zugglied angeordnet sind und jeweils mindestens eine Kontaktfläche mit dem Zugglied aufweisen, sowie mindestens eine Hülse 4, welche um die Klemmelemente herum angeordnet ist und dadurch über die Klemmelemente einen Klemmdruck auf das Zugglied ausübt.

Bei der Hülse handelt es sich insbesondere um eine starre Hülse, d.h., dass die Hülse im Verhältnis zum Klemmelement und insbesondere im Verhältnis zur weichen Schicht des Klemmelements wesentlich höhere Steifigkeit aufweist.

Die Hülse besteht insbesondere aus einem Kunststoff, aus Metall, aus einer Metalllegierung oder aus einem anderen hochfesten Material. Bevorzugt besteht die Hülse aus faserverstärktem Kunststoff oder Stahl, meist bevorzugt aus kohlefaserverstärktem Kunststoff auf Epoxidharzbasis.

Grundsätzlich kann die Hülse beliebig ausgebildet sein, sofern sie zur Aufnahme des oder der Klemmelemente mit Zugglied und gegebenenfalls Reibungselement und zur Ausübung eines ausreichenden Klemmdrucks auf das Zugglied geeignet ist. Demnach muss die Hülse nicht rohrförmig ausgestaltet sein, sondern kann eine zur Aufnahme der Klemmelemente geeignete Bohrung oder Aussparung in einem beliebigförmigen Gegenstand sein. Beispielsweise zeigt Figur 3 einen Querschnitt durch eine erfindungsgemässe Vorrichtung 1 bestehend aus einem Zugglied 2, einem Klemmelement 3 und einer Hülse 4, wobei die Hülse die Form eines in Längsrichtung halbierten Rohrs mit einer ebenen Auflage 41 als Gegenstück zum Klemmelement aufweist.

Figur 4 zeigt einen Querschnitt durch eine erfindungsgemässe Vorrichtung 1, wobei die Hülse 4 eine rechteckige Form mit einer ebenen Auflage 41 als Gegenstück zum Klemmelement aufweist. Bei dieser Ausführungsform weist das Klemmelement 3 die Form eines Quaders oder eines stupfen Keils auf, wobei der Querschnittsreduktion des stumpfen Keils gegen die Zugrichtung des Zugglieds verläuft.

Figur 5 zeigt einen Querschnitt durch eine erfindungsgemässe Vorrichtung 1 mit einer Hülse 4, welche eine rechteckige Form aufweist, wobei diese Ausführungsform zwei Klemmelemente 3 aufweist, welche um das Zugglied 2 angeordnet sind. Analog zu Figur 4 weisen die Klemmelemente 3 die Form von Quadern oder stumpfen Keilen auf, wobei der Querschnittsreduktion der stumpfen Keile gegen die Zugrichtung des Zugglieds verläuft.

Figur 6a zeigt einen Längsschnitt durch eine erfindungsgemässe Vorrichtung bestehend aus einem Zugglied 2, einem Klemmelement 3 und einer Hülse 4, wobei das Klemmelement eine Querschnittsreduktion gegen die Zugrichtung 6 des Zugglieds 2 aufweist. Die Hülse 4 weist entsprechend eine zur Aufnahme der Klemmelemente und zur Ausübung eines Klemmdrucks geeignete innere Form auf.

Weiterhin kann die Hülse einteilig oder mehrteilig ausgebildet sein, wobei bei mehrteiliger Ausführung auch Einzelteile aus unterschiedlichen Materialien verwendet werden können. Beispielsweise kann die Hülse aus einer geeigneten Aussparung beispielweise im Beton eines zu Verstärkenden Tragwerks in Kombination mit einem, die Aussparung abdeckenden Stahlkörper gebildet sein. In diesem Fall würde die Betonfläche die Auflage, wie sie beispielsweise in Figur 4 gezeigt ist, bilden.

Eine besonders bevorzugte Ausführungsform einer mehrteiligen Hülse bildet auch die, bei welcher die Könizität der Hülse durch Anbringen oder Einschieben eines Keils oder eines keilförmigen oder konischen Körpers erzeugt wird. Dies kann einerseits an der losen Hülse oder auch an der bereits montierten Vorrichtung bei vorgespanntem Zugglied erfolgen.

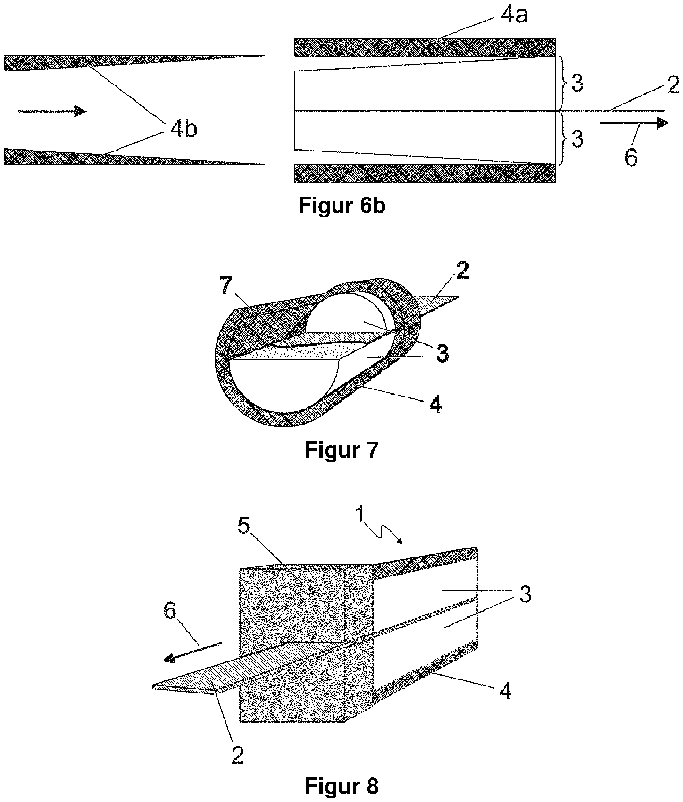

Beispielweise zeigt Figur 6b einen Längsschnitt durch eine erfindungsgemässe Vorrichtung bestehend aus einem Zugglied 2, zwei Klemmelementen 3 (weiche und harte Schicht nicht separat dargestellt) und einer Hülse 4, welche eine rechteckige Querschnittsform aufweist. Die Hülse 4 ist in diesem Fall mehrteilig aufgebaut aus einem äusseren Teil 4a ohne Querschnittsreduktion bzw. Keilanzug und zwei inneren Teilen 4b, welche in diesem Fall als spitze Keile ausgebildet sind. Am vorgespannten Zugglied 2 werden also in einem ersten Schritt die Klemmelemente angelegt. Anschliessend wird der äussere Teil der Hülse über die Klemmelemente geschoben. Zuletzt werden die inneren Teile der Hülse zwischen Klemmelementen und äusserem Teil der Hülse eingetrieben, wodurch Querdruck auf die Klemmelemente aufgebracht wird. Eine analoge Ausführungsform ist auch bei einer Vorrichtung mit nur einem Klemmelement, wie sie beispielsweise in Figur 4 dargestellt ist, besonders geeignet.

Bevorzugt handelt es sich bei der Hülse um eine rohrförmige Hülse mit einem runden Querschnitt, wobei die innere Form der Hülse stets eine zur Aufnahme der Klemmelemente mit Zugglied und gegebenenfalls Reibungselement geeignete Form sein muss, welche zur Ausübung eines ausreichenden Klemmdrucks auf das Zugglied geeignet ist.

Bei Verwendung zweier Klemmelemente in Form von stumpfen Keilen wird eine Hülse mit einem recheckigen Querschnitt eingesetzt, wobei auch hierbei die innere Form der Hülse stets eine zur Aufnahme der Klemmelemente mit Zugglied und gegebenenfalls Reibungselement geeignete Form aufweisen muss. Die Hülse kann dabei aus ausreichend steifen Platten hergestellt werden.

Um einen optimalen Klemmdruck auf das Zugglied auszuüben, weist die Hülse typischerweise eine innere Form auf, welche einen gegenüber der Aussenform der Klemmelemente mit Zugglied und gegebenenfalls Reibungselement reduzierten Querschnitt aufweist.

Der Unterschied des Durchmessers der Gesamtheit der Klemmelemente mit Zugglied und gegebenenfalls Reibungselement zum inneren Durchmesser der Hülse beträgt insbesondere 2 bis 10 %, bevorzugt etwa 5 %.

Bei der Bereitstellung erfindungsgemässer Vorrichtungen wird die Hülse auf das Klemmelement, welches gegebenenfalls mit Reibungselement versehen ist und am Zugglied angeordnet ist, aufgeschoben, bzw. das Klemmelement wird in die Hülse eingetrieben, wodurch sich der notwendige Klemmdruck auf das Zugglied aufbaut.

Handelt es sich bei der Vorrichtung um eine solche, welche eine mehrteilige Hülse aufweist, kann der Klemmdruck auch auf anderem Wege als durch Aufschieben oder Eintreiben erzeugt werden. Beispielsweise kann eine mehrteilige Hülse direkt um die Klemmelemente herum angeordnet und fixiert werden. Handelt es sich bei der Vorrichtung um eine Vorrichtung, wie sie in Figur 6b dargestellt ist, wird der Klemmdruck nicht durch Aufschieben der Hülse als solche erzeugt, sondern durch Eintreiben der inneren Teile, also der Keile zwischen äusserem Teil der Hülse und Klemmelementen.

Das Zugglied besteht aus einer faserverstärkten Kunststoff-Flachbandlamelle, wie sie dem Fachmann für unterschiedliche Anwendungen bekannt ist. Insbesondere handelt es sich um unidirektional faserverstärkte Kunststoff-Flachbandlamellen. Die Faserverstärkung erfolgt üblicherweise durch Kohlefasern. Als Kunststoffmatrix dient insbesondere eine Epoxidharzmatrix. Geeignete faserverstärkte Kunststoff-Flachbandlamellen sind beispielsweise unter dem Handelsnamen Sika^{®} CarboDur^{®} kommerziell erhältlich sind von Sika Schweiz AG.

In einer bevorzugten Ausführungsform umfasst die erfindungsgemässe Vorrichtung im Bereich der Kontaktflächen zwischen Klemmelement und Zugglied zusätzlich ein Reibungselement. Das Reibungselement hat die Funktion, die Reibung zwischen Klemmelement und Zugglied zu erhöhen und somit das Herausschlüpfen des Zugglieds aus der Vorrichtung auch bei besonders hohen Zugkräften zu verhindern.

Insbesondere ist das Reibungselement ausgewählt aus
- einer Beschichtung des Zugglieds mit Hartkörnern;
- einer Beschichtung der Klemmelemente mit Hartkörnern; und
- einem mit Hartkörnern besetzten Gewebe, insbesondere ein Netz oder ein Gitter.

Bei den Hartkörnern handelt es sich insbesondere um scharfkantige Körner, welche typischerweise aus einem Material bestehen, welches eine Mohssche Härte im Bereich von ≥ 5, insbesondere von ≥ 7, bevorzugt von ≥ 9, aufweist. Beispielsweise handelt es sich bei den Hartkörnern um solche aus Korund oder Siliciumcarbid.

Die Korngrösse der Hartkörner beträgt typischerweise 0.05 bis 1.0 mm, insbesondere 0.2 bis 0.5 mm.

Meist bevorzugt besteht das Reibungselement aus einer Beschichtung des Klemmelements im Bereich seiner Kontaktfläche mit dem Zugglied, mit Hartkörnern.

Handelt es sich bei der Vorrichtung um eine Ausführungsform mit mehr als einem Klemmelement, umfasst diese insbesondere im Bereich der Kontaktflächen zwischen allen Klemmelementen und Zugglied zusätzlich je ein Reibungselement.

Figur 7 zeigt einen schematischen Schichtaufbau einer Vorrichtung, wie sie bereits in Figur 2 beschrieben worden ist, wobei die Klemmelemente 3 in dieser Ausführungsform ein Reibungselement 7 in Form einer Beschichtung der Klemmelemente mit Hartkörnern aufweisen.

Die Krafteinleitung in das Zugglied erfolgt in einer bevorzugten Ausführungsform über das Klemmelement bzw. die Klemmelemente der Vorrichtung und nicht über die Hülse.

Wie in Figur 8 dargestellt erfolgt die Krafteinleitung typischerweise dadurch, dass, in Zugrichtung 6 des Zugglieds 2 betrachtet, vor die erfindungsgemässe Vorrichtung 1 eine Schlitzplatte 5 angeordnet ist, auf welcher sich das Klemmelement bzw. die Klemmelemente 3 abstützen. Die Schlitzplatte weist dabei einen Schlitz auf, durch welchen das Zugglied hindurchgeführt werden kann. Gleichzeitig stützt die Schlitzplatte die Klemmelemente 3 auf einer möglichst grossen Fläche ab.

Da sich, wie in Figur 8 zu erkennen ist, auch die Hülse 4 zumindest teilweise auf der Schlitzplatte 5 abstützt, ist dem Fachmann selbstverständlich klar, dass auch über die Hülse eine gewisse Kraftübertragung auf das Zugglied stattfindet, jedoch erfolgt die Krafteinleitung hauptsächlich über die Klemmelemente 3.

Typischerweise besteht die Schlitzplatte aus Metall oder aus einer Metalllegierung. Weiterhin muss die Schlitzplatte nicht einteilig ausgebildet sein, sondern kann aus mehreren Teilen bestehen. Eine mehrteilige Schlitzplatte eignet sich beispielsweise dann, wenn sie an einem bereits einsatzbereiten Zugglied, welches bereits mit erfindungsgemässen Vorrichtungen zur Krafteinleitung versehen ist, angebracht werden soll.

Die Krafteinleitung in das Zugglied über das Klemmelement bzw. die Klemmelemente der erfindungsgemässen Vorrichtung ist besonders vorteilhaft. Bei dieser Ausführungsform sind die Klemmelemente zwischen Hülse, Zugglied und Abstützung eingeschlossen und weisen bei grossen Belastungen eine, durch ihren besonderen Aufbau aus mindestens zwei aufeinanderliegenden Schichten, bedingte, volumenkonstante elastische und viskoplastische Verformung im Bereich der Kontaktfläche des Klemmelements und des Zugglieds auf, welche zum Ausgleich von Spannungen zwischen Klemmelement und Zugglied führt. Diese Eigenschaft verbessert die Klemmwirkung der Klemmelemente und somit die Effizienz der Krafteinleitung deutlich.

In einer meist bevorzugten Ausführungsform umfasst die erfindungsgemässe Vorrichtung, wie sie vorhergehend beschrieben worden ist, zwei Klemmelemente, welche um das Zugglied angeordnet sind und je eine Kontaktfläche mit dem Zugglied aufweisen, wobei die Kontaktflächen insbesondere mit je einem Reibungselement versehen sind, sowie eine Hülse aus kohlefaserverstärktem Kunststoff, welche um die beiden Klemmelemente herum angeordnet ist und dadurch über die Klemmelemente einen Klemmdruck auf das Zugglied ausübt.

Erfindungsgemäss ist das Klemmelement aus mindestens zwei aufeinanderliegenden Schichten gebildet, von denen mindestens eine erste, weiche Schicht aus einem Material besteht, welches einen Elastizitätsmodul im Bereich von 1000 bis 6000 MPa aufweist, und von denen mindestens eine zweite, harte Schicht aus einem Material besteht, welches einen höheren Elastizitätsmodul als die weiche Schicht aufweist.

In einer Ausführungsform der Erfindung besteht ein Klemmelement der erfindungsgemässen Vorrichtung aus zwei Schichten, wobei
- die erste, weiche Schicht zwischen dem Zugglied 2 und der zweiten, harten Schicht angeordnet ist;
   oder
- die erste, weiche Schicht zwischen der zweiten Schicht und der Hülse 4 angeordnet ist.

In einer weiteren bevorzugten Ausführungsform besteht ein Klemmelement der erfindungsgemässen Vorrichtung aus drei Schichten, wobei jeweils eine weiche Schicht an das Zugglied 2 und eine an die Hülse 4 angrenzen und eine harte Schicht zwischen den beiden weichen Schichten angeordnet ist.

Meist bevorzugt weist ein Klemmelement 3 der erfindungsgemässen Vorrichtung mindestens eine am Zugglied 2 angrenzende weiche Schicht auf, wobei diese weiche Schicht eine keilförmige Struktur mit einer Querschnittsreduktion gegen die Zugrichtung des Zugglieds aufweist.

Diese Ausführungsform, bei welcher die grösste Dicke der weichen Schicht im lastnahen Bereich liegt, ist besonders bevorzugt, da es dadurch möglich ist, den Anpressdruck und die Schubspannung zwischen Klemmelement und Zugglied vom lastnahen zum lastfernen Bereich hin gleichmässig zu verteilen oder gar leicht ansteigen zu lassen.

Besonders bevorzugt ist die durchschnittliche Querschnittshöhe der harten Schicht eines Klemmelements der erfindungsgemässen Vorrichtung, grösser als die durchschnittliche Querschnittshöhe der weichen Schicht.

Bei den Klemmelementen der erfindungsgemässen Vorrichtung weist das Material der mindestens einen weichen Schicht einen Elastizitätsmodul im Bereich von 1000 bis 6000 MPa auf. Insbesondere weist das Material der weichen Schicht weiterhin eine Biegezugfestigkeit von ≥ 25 MPa, insbesondere von 50 bis 150 MPa, und eine Druckfestigkeit von ≥ 25 MPa auf.

Die angegebenen Werte beziehen sich auf Messungen entsprechend den Normen ISO 604 für den Elastizitätsmodul sowie ISO 178 für die Biegezugfestigkeit und die Druckfestigkeit.

Beim Material der weichen Schicht des Klemmelements handelt es sich bevorzugt um Kunststoff. Dabei kann grundsätzlich jeder beliebige Kunststoff mit den entsprechenden physikalischen Eigenschaften eingesetzt werden, wobei dieser gefüllt oder ungefüllt oder gegebenenfalls faserverstärkt sein kann. Als gefüllter Kunststoff kann beispielsweise auch ein elastifizierter Mörtel eingesetzt werden.

Insbesondere besteht die weiche Schicht des Klemmelements aus einem Kunststoff umfassend mindestens ein Polyurethanpolymer. Der Kunststoff ist vorzugsweise ungefüllt.

Die Vorteile des bevorzugt eingesetzten Kunststoffs sind die im Verhältnis zum Elastizitätsmodul hohen Biegezug- und Druckfestigkeiten, die sehr gute Formbeständigkeit, die sehr hohe Quellbeständigkeit sowie die dichte, gleitfähige Oberfläche. Die geringe Gleitreibung ermöglicht den Aufbau grosser Klemmkräfte bei verhältnismässig geringer Verpresskraft.

Die im Vergleich zum Zugglied, zur Hülse sowie zur harten Schicht des Klemmelements weiche Schicht des Klemmelements erzeugt einen gleichmässigen Klemmdruck auf das Zugglied, was eine sehr effiziente und gleichmässige Krafteinleitung in das Zugglied ermöglicht. Insbesondere bei Zuggliedern aus unidirektional faserverstärkten Kunststoff-Flachbandlamellen ist dies ein besonderer Vorteil, da unterschiedliche Spannungen zwischen den Fasern nur beschränkt ausgeglichen werden können.

Ein geeigneter Kunststoff zur Herstellung der weichen Schicht des Klemmelements ist unter dem Handelsnamen SikaBlock^{®}, beispielsweise SikaBlock^{®} M940, kommerziell erhältlich von Sika Deutschland AG.

Beim Material der harten Schicht des Klemmelements handelt es sich bevorzugt um ein Material mit einem Elastizitätsmodul von > 6000 MPa, insbesondere im Bereich von 10'000 bis 220'000 MPa, bevorzugt im Bereich von 12'000 bis 25'000 MPa. Beispielsweise eignet sich als Material für die harte Schicht des Klemmelements Stahl mit einem Elastizitätsmodul im Bereich von 210'000 MPa oder ein Kunststoff wie Polyurethan oder Epoxidharz, welche gefüllt oder ungefüllt sein können und typischerweise zweibis dreifach höhere Elastizitätsmodule als das Material der weichen Schicht aufweisen. Für die Herstellung der harten Schicht des Klemmelements kann grundsätzlich auch die gleiche Kunststoffmatrix wie für die weiche Schicht verwendet werden, wobei bei der harten Schicht der Elastizitätsmodul beispielsweise durch Füllstoffe und Füllgrad eingestellt werde kann.

Die weiche und die harte Schicht der erfindungsgemässen Vorrichtung können lose aufeinander gelegt sein, sodass sie nur über den Klemmdruck innerhalb der Vorrichtung aneinander gehalten werden, oder auch miteinander verbunden sein. Insbesondere ist das Klemmelement als Verbundbauteil aus den beiden Schichten gebildet.

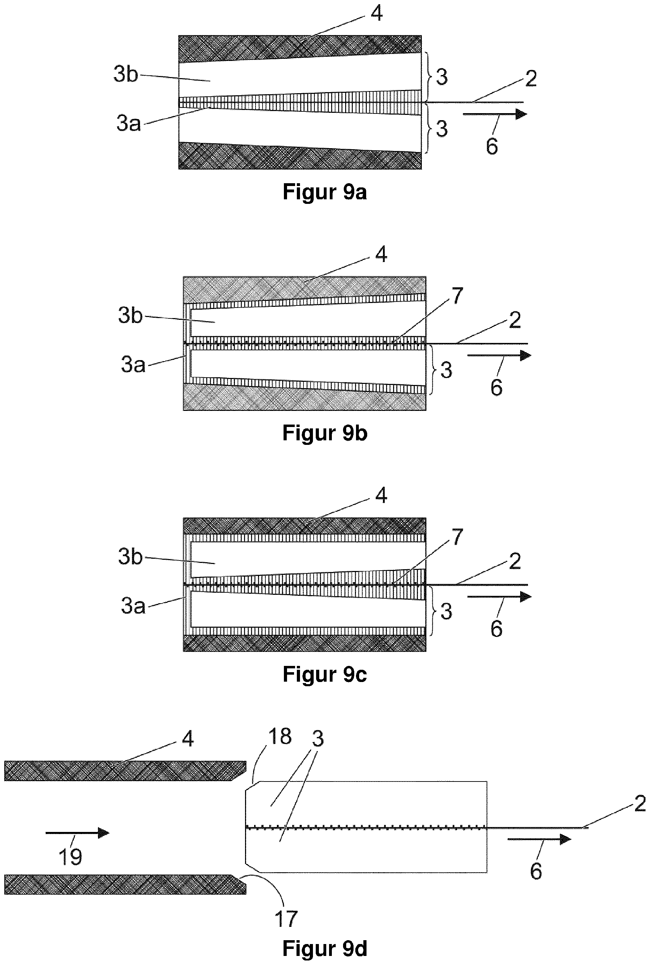

Figur 9a zeigt eine erfindungsgemässe Vorrichtung in einer Ausführungsform, bei welcher die Gesamtheit der Klemmelemente 3 eine konische Struktur aufweist, wobei die Querschnittsreduktion gegen die Zugrichtung 6 des Zugglieds 2 verläuft. Die Hülse 4 weist eine zur Aufnahme der Klemmelemente und zur Ausübung eines Klemmdrucks geeignete innere Form auf, also ebenfalls eine konische Aussparung. Die Klemmelemente 3, sind jeweils aus zwei aufeinanderliegenden Schichten gebildet, von denen die erste, weiche Schicht 3a aus einem Material, welches einen Elastizitätsmodul im Bereich von 1000 bis 6000 MPa aufweist, direkt am Zugglied 2 anliegt, und von denen die zweite, harte Schicht 3b aus einem Material, welches einen höheren Elastizitätsmodul als die weiche Schicht aufweist, zwischen der weichen Schicht 3a und der Hülse 4 liegt. Die weiche Schicht 3a ist keilförmig bzw. als stumpfer Keil ausgebildet, wobei die Querschnittsflächenreduktion des Keils gegen die Zugrichtung 6 des Zugglieds 2 verläuft.

Figur 9b zeigt eine erfindungsgemässe Vorrichtung in einer Ausführungsform, bei welcher die zwei Klemmelemente 3 jeweils eine konische Struktur mit Querschnittsreduktion gegen die Zugrichtung 6 des Zugglieds 2 aufweisen, und entsprechender Hülse 4 mit konischer Aussparung. Die Klemmelemente 3 sind jeweils aus einer weichen Schicht 3a und einer harten Schicht 3b gebildet, wobei die weiche Schicht 3a die harte Schicht 3b auf drei Seiten einschliesst. Weiterhin weist die Vorrichtung aus Figur 9b zwischen dem Zugglied 2 und dem Klemmelement 3 ein Reibungselement 7 auf.

Figur 9c zeigt eine erfindungsgemässe Vorrichtung in einer Ausführungsform, bei welcher die zwei Klemmelemente 3 jeweils eine zylinderförmige Struktur ohne Keilanzug aufweisen, und entsprechender Hülse 4 mit zylinderförmiger Aussparung. Die Klemmelemente 3 sind jeweils aus einer weichen Schicht 3a und einer harten Schicht 3b gebildet, wobei die weiche Schicht 3a die harte Schicht 3b auf drei Seiten einschliesst. Die weiche Schicht 3a zwischen Zugglied 2 und harter Schicht 3b ist keilförmig bzw. als stumpfer Keil ausgebildet, wobei die Querschnittsflächenreduktion des Keils gegen die Zugrichtung 6 des Zugglieds 2 verläuft. Weiterhin weist die Vorrichtung aus Figur 9c zwischen dem Zugglied 2 und dem Klemmelement 3 ein Reibungselement 7 auf.

In analoger Weise zu den in den Figuren 9a, 9b und 9c gezeigten Ausführungsformen, sind diese Ausführungsformen auch bei Vorrichtungen mit einem oder mehr als zwei Klemmelementen geeignet.

Bei allen drei in den Figuren 9a, 9b und 9c gezeigten Ausführungsformen ist der Durchmesser der Gesamtheit der Klemmelemente 3 typischerweise grösser als der innere Durchmesser der Hülse. Dadurch kann ein optimaler Klemmdruck auf das Zugglied 2 ausgeübt werden.

Die in Figur 9c gezeigte Ausführungsform ist in bestimmten Fällen bevorzugt, da sie sehr einfach herzustellen ist. Insbesondere ist bei dieser Ausführungsform die Herstellung der Hülse besonders einfach, da sie durch Zerlegung beispielsweise eines Rohrs aus geeignetem Material erhältlich ist. Bei den in den Figuren 9a und 9b gezeigten Ausführungsformen weist die Aussenseite der Gesamtheit der Klemmelemente und die innere Form der Hülse einen Keilanzug im Bereich von 1:4 bis 1:200, insbesondere im Bereich von 1:100, auf. Die Ausführungsformen mit Keilanzug sind bevorzugt und haben gegenüber den Ausführungsformen ohne Keilanzug den Vorteil, dass das Aufschieben oder Aufziehen der Hülse über die Klemmelemente mit Zugglied und gegebenenfalls Reibungselement, bzw. das Eintrieben dieser in die Hülse erleichtert möglich ist.

Um ein erleichtertes Aufschieben oder Aufziehen der Hülse auf die Klemmelemente zu ermöglichen, kann die Hülse auf jener Seite, von der sie auf die Klemmelemente aufgeschoben oder aufgezogen wird, eine zusätzliche, hierfür geeignete Aussparung an ihrer Innenseite aufweisen. Eine geeignete Aussparung stellt dabei eine sogenannte Fase dar.

Aus dem gleichen Grund kann auch das Klemmelement bzw. die Klemmelemente an jener Seite, von der sie in die Hülse getrieben werden oder von welcher die Hülse über die Klemmelemente geschoben oder gezogen wird, eine derartige Aussparung aufweisen. Insbesondere ist auch diese Aussparung als Fase ausgebildet.

Figur 9d zeigt eine Ausführungsform der erfindungsgemässen Vorrichtung bevor die Hülse 4 in Aufschieberichtung 19 über die Klemmelemente 3 geschoben worden ist, wobei die Hülse 4 mit einer Fase 17 versehen ist, die das erleichtere Eintreiben der Klemmelemente ermöglicht. Weiterhin sind zum gleichen Zweck auch die Klemmelemente mit einer Fase 18 versehen.

Weiterhin betrifft die vorliegende Erfindung die Verwendung einer Vorrichtung, wie sie vorhergehend beschrieben worden ist, zur Krafteinleitung in Zugglieder aus faserverstärkten Kunststoff-Flachbandlamellen.

Die erfindungsgemässe Vorrichtung kann dabei an jeder beliebigen Stelle der Kunststoff-Flachbandlamelle angebracht sein, je nachdem wo die Krafteinleitung erfolgen soll. Insbesondere bildet die Vorrichtung das Abschlusselement des Zugglieds.

Weiterhin kann die erfindungsgemässe Vorrichtung auch verwendet werden, um mehrere Zugglieder aus Kunststoff-Flachbandlamellen miteinander zu verbinden. Hierzu werden die Zugglieder mindestens über die Gesamtlänge der Vorrichtung überlappend zueinander angeordnet. Danach wird an Stelle der Überlappung eine erfindungsgemässe Vorrichtung angebracht. Insbesondere wird bei einer derartigen Verwendung zwischen die zu verbindenden Zugglieder ein Reibungselement gemäss vorhergehender Beschreibung eingesetzt.

Weiterhin betrifft die vorliegende Erfindung ein Zugglied aus faserverstärkten Kunststoff-Flachbandlamellen, umfassend mindestens eine Vorrichtung, wie sie vorhergehend beschrieben ist.

Insbesondere ist das Zugglied ein solches, welches an mindestens einem Ende, insbesondere an beiden Enden, ein Abschlusselement aufweist, wobei dieses Abschlusselement eine Vorrichtung gemäss vorhergehender Beschreibung ist.

Ebenfalls betrifft die vorliegende Erfindung eine Zuggliederanordnung, bestehend aus zwei oder mehr Zuggliedern, welche mittels erfindungsgemässer Vorrichtung miteinander verbunden sind.

Weiterhin betrifft die Erfindung ein Verfahren zur Krafteinleitung in Zugglieder aus faserverstärkten Kunststoff-Flachbandlamellen umfassend die Schritte
i) Anlegen einer Vorrichtung gemäss vorhergehender Beschreibung an ein Zugglied 2, wobei erst mindestens ein Klemmelement 3 am Zugglied angeordnet wird und danach das Aufschieben oder Aufziehen einer Hülse 4 über das mindestens eine Klemmelement und das Zugglied erfolgt, sodass ein Klemmdruck auf das Zugglied ausgeübt wird;
ii) Anlegen einer Zugvorrichtung an das am Zugglied angeordnete mindestens eine Klemmelement mit Hülse;
iii) Einleiten der Kraft in das Zugglied durch die Zugvorrichtung. Ein weiteres Verfahren zur Krafteinleitung in Zugglieder aus faserverstärkten Kunststoff-Flachbandlamellen, welches ebenfalls Gegenstand der vorliegenden Erfindung ist und besonders bevorzugt ist, umfasst die Schritte
i) Bereitstellen eines Zugglieds 2, welches mit einem Ende an einem Tragwerk verankert ist;
ii) Anlegen einer Zugvorrichtung am nicht verankerten Ende des Zugglieds;
iii) Spannen des Zugglieds durch die Zugvorrichtung;
iv) Anlegen einer Vorrichtung gemäss vorhergehender Beschreibung an das nicht verankerte Ende des Zugglieds 2, wobei erst mindestens ein Klemmelement 3 am Zugglied angeordnet wird und danach das Aufschieben oder Aufziehen einer Hülse 4 über das mindestens eine Klemmelement und das Zugglied erfolgt, sodass ein Klemmdruck auf das Zugglied ausgeübt wird;
v) Verankerung des nicht verankerten Endes des Zugglieds.

Insbesondere eignen sich für die beiden vorhergehend beschriebenen Verfahren Ausführungsformen der erfindungsgemässen Vorrichtung mit zwei Klemmelementen.

Weiterhin ist es in den beschriebenen Verfahren üblich, nur an einem Ende des Zugglieds eine Zugvorrichtung anzulegen. Am anderen Ende des Zugglieds wird das Zugglied, beispielweise ebenfalls unter Verwendung einer erfindungsgemässen Vorrichtung als Abschlusselement, verankert.

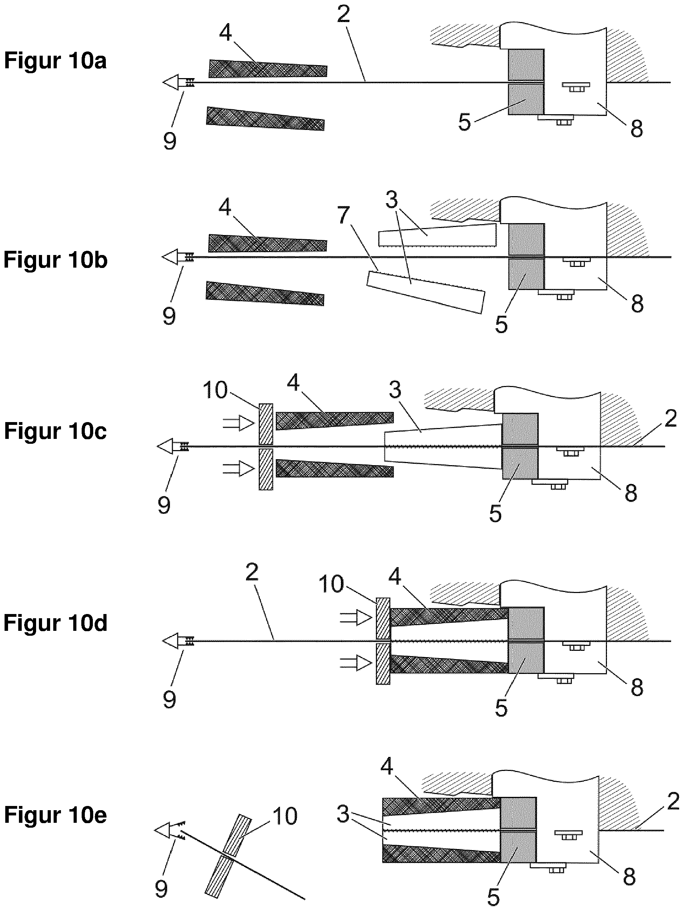

In den Figuren 10a bis 10e ist ein bevorzugtes Verfahren zur Krafteinleitung in Zugglieder aus faserverstärkten Kunststoff-Flachbandlamellen schematisch dargestellt. Es ist hierbei eine Ausführungsform der erfindungsgemässen Vorrichtung mit zwei Klemmelementen dargestellt. Die Klemmelemente sind der Einfachheit halber jeweils einteilig dargestellt, d.h. die harte und die weiche Schicht sind nicht separat abgebildet. Verfahren unter Verwendung von Vorrichtungen mit einem oder mehr als zwei Klemmelementen verlaufen in analoger Weise.

Figur 10a zeigt ein einseitig verankertes Zugglied 2, welches mittels Zugvorrichtung 9, welche mit einer Pfeilspitze ebenfalls die Spannrichtung des Zugglieds darstellt, gespannt wurde und im gespannten Zustand gehalten wird. Die Spannrichtung des Zugglieds verläuft in entgegen gesetzte Richtung zur Zugrichtung des Zugglieds. Weiterhin zeigt Figur 10a eine Haltevorrichtung 8, welche das Zugglied in der gewünschten Position hält und als Befestigungsmittel für die Schlitzplatte 5 dient, sowie die Hülse 4, durch welche das Zugglied 2 geführt wurde.

Zusätzlich zu Figur 10a zeigt Figur 10b zwei Klemmelemente 3, welche mit je einem Reibungselement 7 versehen sind, und im Begriff sind, um das Zugglied 2 herum angeordnet zu werden.

Figur 10c zeigt weiterhin die in ihre Endposition gebrachten Klemmelemente 3 und die Hülse 4, welche über die Klemmelemente geschoben wird. Die Hülse kann dabei mit einer beliebigen geeigneten Vorrichtung über die Klemmelemente geschoben werden. Beispielsweise erfolgt dies mittels einer zweiten Schlitzplatte 10.

Figur 10d zeigt die erfindungsgemässe Vorrichtung 1, wie sie fertig am Zugglied angeordnet ist. In diesem Zustand kann die zweite Schlitzplatte 10 sowie die Zugvorrichtung 9 entfernt werden. Der Überschuss des Zugglieds zwischen der erfindungsgemässen Vorrichtung und der Zugvorrichtung kann entfernt werden. Dies ist in Figur 10e gezeigt.

Ein Verfahren zum Verbinden von zwei oder mehr Zuggliedern, wobei die Zugglieder mit einer erfindungsgemässen Vorrichtung, wie sie vorhergehend beschrieben wurde, miteinander verbunden werden umfasst insbesondere die Schritte
i) Bereitstellen von zwei oder mehr Zuggliedern, welche überlappend zueinander angeordnet sind;
ii) Anlegen mindestens eines Klemmelements an der Stelle, an welcher sich mehrere Zugglieder überlappen, sodass das Klemmelement mindestens eine Kontaktfläche mit einem der aussen liegenden Zugglieder aufweist;
iii) Aufschieben oder Aufziehen einer Hülse über das mindestens eine Klemmelement und die Zugglieder, sodass ein Klemmdruck auf die Zugglieder ausgeübt wird.

Die Zugglieder sind beim beschriebenen Verfahren zum Verbinden von zwei oder mehr Zuggliedern insbesondere gespannt oder vorgespannt. Weiterhin wird zwischen die Zugglieder vorzugsweise jeweils ein Reibungselement, wie es vorhergehend beschrieben worden ist, eingesetzt.

Erfindungsgemässe Vorrichtungen in Verbindung mit Zuggliedern aus faserverstärkten Kunststoff-Flachbandlamellen eignen sich insbesondere für die Verstärkung von Tragwerken, bevorzugt für Tragwerke aus Beton. Typischerweise werden derartige Systeme bei der Sanierung bestehender Tragwerke, wie beispielsweise Brücken oder Decken eingesetzt. Weiterhin können beschriebene Systeme auch zur Verstärkung von Mauerwerken, Holztragwerken, Stahlbauten, Erdbebenverstärkungen und dergleichen verwendet werden.

Die Befestigung der erfindungsgemässen Zugglieder, welche vorhergehend beschrieben worden sind, am Tragwerk kann über Verankerungen erfolgen, wie sie dem Fachmann bereits bekannt sind.

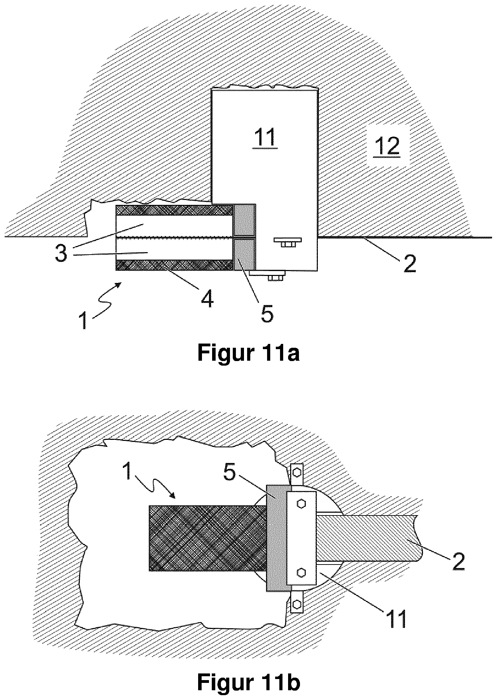

Die Figuren 11a und 11b zeigen beispielsweise die Verankerung eines Zugglieds 2, welches mit einer erfindungsgemässen Vorrichtung 1 zur Krafteinleitung versehen ist, an einem zu verstärkenden Tragwerk 12. Es ist dabei eine Ausführungsform der Vorrichtung mit zwei Klemmelementen dargestellt. Die Klemmelemente sind der Einfachheit halber jeweils einteilig dargestellt, d.h. die harte und die weiche Schicht sind nicht separat abgebildet.

Am Tragwerk 12 wird dabei eine Verankerung 11 angebracht, welche das Zugglied 2 in der gewünschten Position hält und als Befestigungsmittel für die Schlitzplatte 5 dient. Die Vorrichtung 1 zur Krafteinleitung, welche das Abschlusselement des Zugglieds 2 darstellt, ist, in Zugrichtung des Zugglieds betrachtet, hinter der Verankerung 11 bzw. hinter der Schlitzplatte 5 angeordnet. Die Krafteinleitung in das Zugglied erfolgt hierbei über die Klemmelemente 3, durch Abstützung dieser auf die Schlitzplatte 5.

Weiterhin weist die Befestigung des Zugglieds typischerweise ein Zugelement 13 auf, welches die Spannung des Zugglieds ermöglicht.

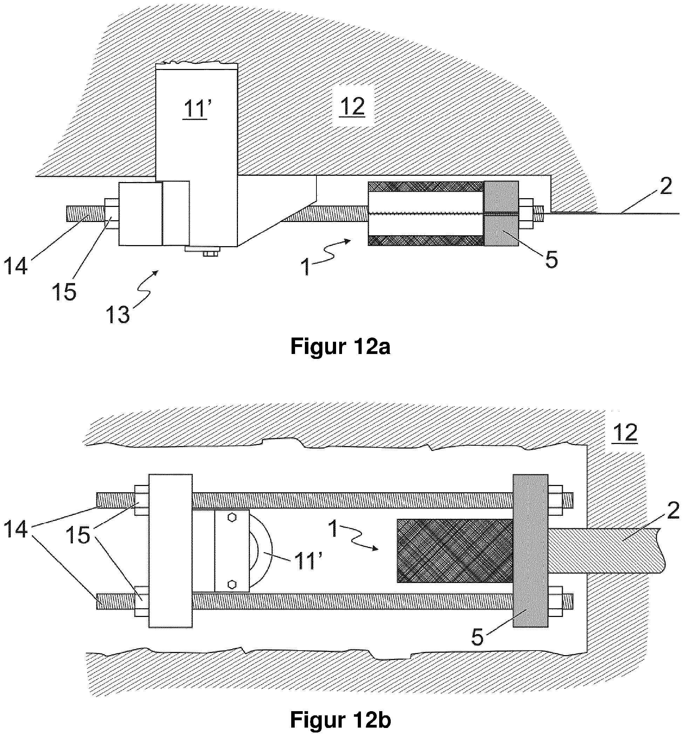

Die Figuren 12a und 12b zeigen beispielsweise ein geeignetes Zugelement zum Spannen eines Zugglieds, welches mit einer erfindungsgemässen Vorrichtung 1 zur Krafteinleitung versehen ist, an einem zu verstärkenden Tragwerk 12.

Im Gegensatz zu dem in den Figuren 11a und 11b beschriebenen Verankerung, befindet sich beim Zugelement die Schlitzplatte 5 nicht direkt am Anker 11' des Zugelements, sondern ist typischerweise über zwei Gewindestangen 14 mit dem Anker verbunden. Die Spannung des Zugglieds erfolgt durch Anziehen der Schraubenmuttern 15. Die Krafteinleitung in das Zugglied erfolgt auch hierbei über die Klemmelemente 3, durch Abstützung dieser auf die Schlitzplatte 5.

Demnach betrifft die vorliegende Erfindung auch ein Verfahren zur Verstärkung von Tragwerken 12 umfassend die Schritte
i) Bereitstellen eines Zugglieds 2, welches je eine erfindungsgemässe Vorrichtung 1, gemäss vorhergehender Beschreibung, als Abschlusselement aufweist;
ii) Befestigen einer zweiteiligen Zugvorrichtung, bestehend aus Verankerung 11 und Zugelement 13, in den Randbereichen der zu verstärkenden Stelle des Tragwerks 12;
iii) Anordnen des Zugglieds 2 an der Oberfläche des Tragwerks 12 und Einführung der Abschlusselemente in jeweils einen Bestandteil der Zugvorrichtung;
iv) Spannen des Zugglieds 2;
v) Verkleben des gespannten Zugglieds mit dem Tragwerk 12.

Erfolgt die Tragwerksverstärkung durch ein Verfahren, wie es in den Figuren 10a bis 10e dargestellt ist, können zur Verankerung des Zugglieds beidseitig Verankerungen verwendet werden, wie sie vorhergehend beschrieben und in den Figuren 11a und 11b dargestellt worden sind. Der Einsatz eines Zugelements ist in diesem Fall nicht nötig, was insbesondere aus Kostengründen ein Vorteil dieser Ausführungsform darstellt. Die zum Spannen des Zugglieds eingesetzte Zugvorrichtung kann nach dem Spannen und Fixieren wieder entfernt werden.

Demnach betrifft die Vorliegende Erfindung auch ein Verfahren zur Verstärkung von Tragwerken 12 umfassend die Schritte
i) Bereitstellen eines Zugglieds 2 aus faserverstärkten Kunststoff-Flachbandlamellen, welches an einem Ende eine erfindungsgemässe Vorrichtung gemäss vorhergehender Beschreibung aufweist;
ii) Befestigen je einer Verankerung 11 in den Randbereichen der zu verstärkenden Stelle des Tragwerks 12 und Anlegen des Zugglieds 2 mit dem Abschlusselement an eine der Verankerungen 11;
iii) Anlegen einer Zugvorrichtung am Ende des Zugglieds 2, welches kein Abschlusselement aufweist;
iv) Spannen des Zugglieds mittels Zugvorrichtung und Anordnen des Zugglieds 2 an die noch nicht belegte Verankerung;
v) Anlegen mindestens eines Klemmelements 3 aus Kunststoff, wie es vorhergehend beschrieben worden ist, am nicht verankerten Ende des gespannten Zugglieds, wobei das Klemmelement, gegenüber der Zugrichtung des Zugglieds, unmittelbar hinter die Verankerung angeordnet wird;
vi) Aufschieben einer Hülse 4, in Zugrichtung des Zugglieds, über das mindestens eine Klemmelement 3, sodass ein Klemmdruck auf das Zugglied 2 ausgeübt wird; und
vii) Verkleben des gespannten Zugglieds mit dem Tragwerk 12.

Die Verklebung des Zugglieds mit dem Tragwerk erfolgt in einem dem Fachmann bekannten Verfahren. Insbesondere werden hierfür zweikomponentige Klebstoffe auf Epoxidharzbasis verwendet, wie sie beispielsweise unter den Handelsnamen Sikadur^{®} kommerziell erhältlich sind von Sika Schweiz AG.

### Bezugszeichenliste

- 1: Vorrichtung zur Krafteinleitung
- 2: Zugglied
- 21, 22: Zugglied
- 3: Klemmelement
- 3a: weiche Schicht
- 3b: harte Schicht
- 4: Hülse
- 4a: äusserer Teil der Hülse
- 4b: innerer Teil der Hülse
- 41: Auflage
- 5: Schlitzplatte
- 6: Zugrichtung des Zugglieds
- 7: Reibungselement
- 8: Haltevorrichtung
- 9: Zugvorrichtung
- 10: zweite Schlitzplatte
- 11: Verankerung
- 11': Anker
- 12: Tragwerk
- 13: Zugelement
- 14: Gewindestange
- 15: Schraubenmutter
- 16: Verankerung
- 17: Fase (Hülse)
- 18: Fase (Klemmelement)
- 19: Aufschiebrichtung der Hülse

## Patentansprüche

1. Vorrichtung (1) zur Krafteinleitung in Zugglieder (2) aus faserverstärkten Kunststoff-Flachbandlamellen umfassend
mindestens ein Klemmelement (3), welches am Zugglied angeordnet ist und mindestens eine Kontaktfläche mit dem Zugglied aufweist; sowie mindestens eine Hülse (4), welche um das Klemmelement und das Zugglied herum angeordnet ist und dadurch über das Klemmelement einen Klemmdruck auf das Zugglied ausübt;
**dadurch gekennzeichnet, dass**
das Klemmelement aus mindestens zwei aufeinanderliegenden Schichten gebildet ist, von denen mindestens eine erste, weiche Schicht aus einem Material besteht, welches einen Elastizitätsmodul im Bereich von 1000 bis 6000 MPa aufweist, und von denen mindestens eine zweite, harte Schicht aus einem Material besteht, welches einen höheren Elastizitätsmodul als die weiche Schicht aufweist, und
dass die Gesamtheit der Klemmelemente eine Struktur ohne Keilanzug aufweist oder eine keilförmige oder konische Struktur aufweist, wobei die Querschnittsreduktion gegen die Zugrichtung des Zugglieds verläuft, und dass die Hülse eine zur Aufnahme des mindestens einen Klemmelements und zur Ausübung eines Klemmdrucks geeignete innere Form aufweist.

2. Vorrichtung nach Anspruch 1, **dadurch gekennzeichnet, dass** das Material der mindestens einen weichen Schicht eine Biegezugfestigkeit von ≥ 25 MPa und eine Druckfestigkeit von ≥ 25 MPa aufweist.

3. Vorrichtung gemäss einem der Ansprüche 1 und 2, **dadurch gekennzeichnet, dass** die durchschnittliche Querschnittshöhe der harten Schicht grösser als die durchschnittliche Querschnittshöhe der weichen Schicht ist.

4. Vorrichtung gemäss einem der Ansprüche 1 bis 3, **dadurch gekennzeichnet,**
**dass** die Vorrichtung zwei Klemmelemente (3) umfasst, welche um das Zugglied angeordnet sind und jeweils mindestens eine Kontaktfläche mit dem Zugglied aufweisen; sowie
**dass** die Vorrichtung eine Hülse (4) umfasst, welche um die beiden Klemmelemente herum angeordnet ist und dadurch über die Klemmelemente einen Klemmdruck auf das Zugglied ausübt.

5. Vorrichtung nach einem der Ansprüche 1 bis 4, **dadurch gekennzeichnet, dass** das Klemmelement (3) aus zwei Schichten besteht, wobei
- die erste, weiche Schicht zwischen dem Zugglied (2) und der zweiten, harten Schicht angeordnet ist;
oder
- die erste, weiche Schicht zwischen der zweiten Schicht und der Hülse (4) angeordnet ist.

6. Vorrichtung nach einem der Ansprüche 1 bis 4, **dadurch gekennzeichnet, dass** das Klemmelement (3) aus drei Schichten besteht, wobei jeweils eine weiche Schichte an das Zugglied (2) und eine an die Hülse (4) angrenzen und eine harte Schicht zwischen den beiden weichen Schichten angeordnet ist.

7. Vorrichtung nach einem der Ansprüche 5 oder 6, **dadurch gekennzeichnet, dass** das Klemmelement (3) mindestens eine am Zugglied (2) angrenzende weiche Schicht aufweist, wobei diese weiche Schicht eine keilförmige oder konische Struktur mit einer Querschnittsreduktion gegen die Zugrichtung des Zugglieds aufweist.

8. Vorrichtung gemäss einem der vorhergehenden Ansprüche, **dadurch gekennzeichnet, dass** die Kontaktfläche zwischen Klemmelement und Zugglied zusätzlich ein Reibungselement (7) umfasst.

9. Verfahren zur Krafteinleitung in Zugglieder aus faserverstärkten Kunststoff-Flachbandlamellen umfassend die Schritte
i) Anlegen einer Vorrichtung gemäss einem der Ansprüche 1 bis 8 an ein Zugglied (2), wobei erst mindestens ein Klemmelement (3) am Zugglied angeordnet wird und danach das Aufschieben oder Aufziehen einer Hülse (4) über das mindestens eine Klemmelement und das Zugglied erfolgt, sodass ein Klemmdruck auf das Zugglied ausgeübt wird;
ii) Anlegen einer Zugvorrichtung an das am Zugglied angeordnete mindestens eine Klemmelement mit Hülse;
iii) Einleiten der Kraft in das Zugglied durch die Zugvorrichtung.

10. Verfahren zur Krafteinleitung in Zugglieder aus faserverstärkten Kunststoff-Flachbandlamellen umfassend die Schritte
i) Bereitstellen eines Zugglieds (2), welches mit einem Ende an einem Tragwerk verankert ist;
ii) Anlegen einer Zugvorrichtung am nicht verankerten Ende des Zugglieds;
iii) Spannen des Zugglieds durch eine Zugvorrichtung;
iv) Anlegen einer Vorrichtung gemäss einem der Ansprüche 1 bis 8 an das nicht verankerte Ende des Zugglieds (2), wobei erst mindestens ein Klemmelement (3) am Zugglied angeordnet wird und danach das Aufschieben oder Aufziehen einer Hülse (4) über das mindestens eine Klemmelement und das Zugglied erfolgt, sodass ein Klemmdruck auf das Zugglied ausgeübt wird;
v) Verankerung des nicht verankerten Endes des Zugglieds.

11. Verwendung einer Vorrichtung gemäss einem der Ansprüche 1 bis 8 zur Krafteinleitung in Zugglieder aus faserverstärkten Kunststoff-Flachbandlamellen.

12. Verwendung einer Vorrichtung gemäss einem der Ansprüche 1 bis 8 um Zugglieder aus faserverstärkten Kunststoff-Flachbandlamellen miteinander zu verbinden.

13. Zugglied aus faserverstärkten Kunststoff-Flachbandlamellen, umfassend mindestens eine Vorrichtung gemäss einem der Ansprüche 1 bis 8.

14. Verfahren zur Verstärkung von Tragwerken (12) umfassend die Schritte
i) Bereitstellen eines Zugglieds (2) aus faserverstärkten Kunststoff-Flachbandlamellen, welches je eine Vorrichtung gemäss einem der Ansprüche 1 bis 8 als Abschlusselemente aufweist;
ii) Befestigen einer zweiteiligen Zugvorrichtung, bestehend aus Verankerung (11) und Zugelement (13), in den Randbereichen der zu verstärkenden Stelle des Tragwerks (12);
iii) Anordnen des Zugglieds (2) an die Oberfläche des Tragwerks (12) und Einführung der Abschlusselemente in jeweils einen Bestandteil der Zugvorrichtung;
iv) Spannen des Zugglieds (2);
v) Verkleben des gespannten Zugglieds mit dem Tragwerk (12).

15. Verfahren zur Verstärkung von Tragwerken (12) umfassend die Schritte
i) Bereitstellen eines Zugglieds (2) aus faserverstärkten Kunststoff-Flachbandlamellen, welches an einem Ende eine Vorrichtung zur Krafteinleitung in Zugglieder (2) aus faserverstärkten Kunststoff-Flachbandlamellen als Abschlusselement umfasst;
ii) Befestigen je einer Verankerung (11) in den Randbereichen der zu verstärkenden Stelle des Tragwerks (12) und Anlegen des Zugglieds (2) mit dem Abschlusselement an eine der Verankerungen (11);
iii) Anlegen einer Zugvorrichtung am Ende des Zugglieds (2), welches kein Abschlusselement aufweist;
iv) Spannen des Zugglieds mittels Zugvorrichtung und Anordnen des Zugglieds (2) an die noch nicht belegte Verankerung;
v) Anlegen einer Vorrichtung gemäss einem der Ansprüche 1 bis 8 an das nicht verankerte Ende des Zugglieds (2), wobei erst mindestens das Klemmelement (3) am Zugglied angeordnet wird und danach das Aufschieben oder Aufziehen einer Hülse (4) über das mindestens eine Klemmelement und das Zugglied erfolgt, sodass ein Klemmdruck auf das Zugglied ausgeübt wird; und
vi) Verkleben des gespannten Zugglieds mit dem Tragwerk (12).
